# EUROPEAN PATENT SPECIFICATION

(11) **EP 4 521 560 B1**
(45) Date of publication and mention of the grant of the patent: **13.05.2026**
(21) Application number: 24198695.9
(22) Date of filing: 05.09.2024
(51) Int. Cl.: H01R 4/64, H01R 4/56, H01R 4/60, H02G 3/06

(54) **GROUND CONES FOR PROVIDING ELECTRICAL CONTACT IN GROUNDING OF AN ELECTRICAL SYSTEM**
KEGEL ZUR BEREITSTELLUNG EINES ELEKTRISCHEN KONTAKTS IN DER ERDUNG EINES ELEKTRISCHEN SYSTEMS
CÔNES DE MISE À LA TERRE POUR FOURNIR UN CONTACT ÉLECTRIQUE DANS LA MISE À LA TERRE D'UN SYSTÈME ÉLECTRIQUE

(30) Priority: 07.09.2023 US 202318462811
(43) Date of publication of application: 12.03.2025
(73) Proprietor: ABB SCHWEIZ AG, 5400 Baden (CH)
(72) Inventor: COOPER, Anthony, 5400 Baden (CH); JAFFARI, Andy, 5400 Baden (CH); LOPEZ, Omar, 5400 Baden (CH)
(74) Representative: Zimmermann & Partner Patentanwälte mbB

(56) References cited:
- EP-A1- 2 592 322
- US-A1- 2013 118 802

## Description

### BACKGROUND

The field of the disclosure relates generally to electrical systems, and more particularly, to ground cones for grounding in an electrical system.

Conduits and conduit assemblies are used to carry and protect electrical wiring or cabling in an electrical system. Conduit assemblies are constructed by coupling lengths of conduits with fittings. To ensure the performance and safety of the conduit assembly, electrical continuity of the conduit assembly is required to pass certain testing. Ground cones are used to provide electrical contact of the interior of the conduit with the rest of the conduit assembly. EP2 592 322 A1 discloses such known ground cone. Known methods and assemblies are disadvantaged in some aspects and improvements are desired.

### BRIEF DESCRIPTION

In one aspect, a ground cone as defined in appended claim 1 is provided. The ground cone includes a cone body including one or more tabs positioned on the cone body and extending radially outward from the cone body, the one or more tabs positioned separately from one another. At least one of the one or more tabs has a helical edge, the helical edge shaped to be received in a groove of a thread. The helical edge further comprises a projection protruding radially outward from a remaining of the helical edge. The cone body includes a cap end and a bottom end opposite the cap end. The ground cone also includes a cap extending longitudinally from the cone body at the cap end and extending toward the bottom end. Optionally, the cap further comprises a flange extending radially outward away from a remaining of the cap. The cone body and the cap define a channel sized to receive an end of a conduit therein. Optionally, the cone body comprises at least one of (a) a bulging portion extending radially outward from a remaining of the cone body; (b) a leading portion positioned at the bottom end of the cone body and positioned longitudinally further away from the cap than the helical edge; and/or (c) a plurality of tabs, the helical edges of the plurality of tabs shaped to be received in grooves of threads. Optionally, the ground cone is integrally formed into one single piece.

In another aspect, a ground cone for providing electrical contact to an interior of a conduit is provided. The ground cone includes a cone body including one or more tabs positioned on the cone body and extending radially outward from the cone body, the one or more tabs positioned separately from one another, at least one of the one or more tabs having an edge including a projection protruding radially outward from a remaining of the edge. The cone body includes a cap end and a bottom end opposite the cap end. The ground cone also includes a cap extending longitudinally from the cone body at the cap end and extending toward the bottom end. The cone body and the cap define a channel sized to receive an end of a conduit therein.

In one more aspect, a method as defined in appended claim 8 is provided. The method includes providing a conduit, and providing a ground cone. The ground cone includes a cone body including one or more tabs positioned on the cone body and extending radially outward from the cone body, the one or more tabs positioned separately from one another. At least one of the one or more tabs having an edge including a projection protruding radially outward from a remaining of the edge. The cone body includes a cap end and a bottom end opposite the cap end. The ground cone also includes a cap extending longitudinally from the cone body at the cap end and extending toward the bottom end. The cone body and the cap define a channel sized to receive an end of a conduit therein. The method further includes coupling the ground cone with the conduit.

### DRAWINGS

These and other features, aspects, and advantages of the present disclosure will become better understood when the following detailed description is read with reference to the accompanying drawings in which like characters represent like parts throughout the drawings.
FIG. 1A is a conduit assembly.
FIG. 1B is a cross-sectional view of the conduit assembly shown in FIG. 1A along cross-sectional line 1B-1B of FIG. 1A.
FIG. 1C is an exploded view of the conduit assembly shown in FIG. 1A.
FIG. 2A is a perspective view of an example ground cone in the conduit assembly shown in FIG. 1A.
FIG. 2B is a side perspective view of the ground cone shown in FIG. 2A.
FIG. 2C is a bottom view of the ground cone shown in FIG. 2A.
FIG. 2D is a cross-sectional view of the ground cone along cross-sectional line 2D-2D of FIG. 2A.
FIG. 3 is a flow chart of an example method of fabricating a conduit assembly using the ground cone shown in FIGs. 1A-2D.

### DETAILED DESCRIPTION

The disclosure includes assemblies and methods for fabricating a metal conduit assembly of an electrical system. Flexible conduits are depicted as examples for illustration purposes only. Assemblies and methods described herein may be applied with rigid conduits such as rigid metal conduits (RMC), intermediate metal conduits (IMC), or other types of rigid conduits. Method aspects will be in part apparent and in part explicitly discussed in the following description.

Conduit assemblies are constructed using fittings and conduits. Wiring is placed inside a conduit assembly for carrying electricity in an electrical system. To ensure the safety and performance of the assembly, certain tests on the assembly under various standards are required. For example, in a Underwriters Laboratories (UL) test, the conduit assembly fabricated with conduits and fittings is required to pass a set quantity of current, such as in a range from 470 Ampere (A) to 750 A, without failure or damages to the components of the conduit assembly. As part of the mechanism of ensuring the electrical continuity of the conduit assembly, a ground cone is used to provide and/or maintain electrical contact between interior of the conduit and the rest of the conduit assembly. A ground cone also provides and/or maintains physical contact of the conduit with the rest of the conduit assembly. Without a ground cone, the conduit may not be coupled with other components of the conduit assembly and the conduit assembly may fall apart.

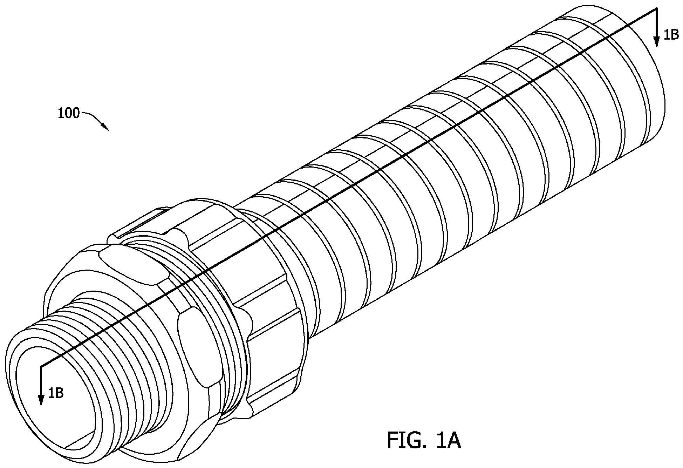

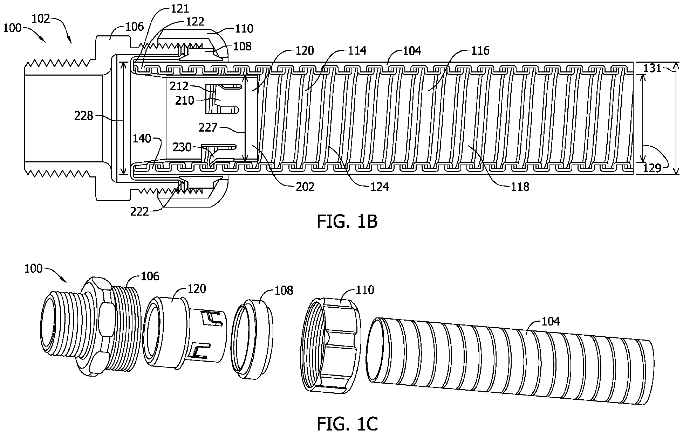

FIGs. 1A-1C show a conduit assembly 100 including an example fitting assembly 102 coupled with a conduit 104. FIG. 1A is a perspective view of conduit assembly 100. FIG. 1B is a cross-sectional view of conduit assembly 100 along cross-sectional line 1B-1B of FIG. 1A. FIG. 1C is an exploded view of conduit assembly 100.

In the example embodiment, fitting assembly 102 includes a fitting body 106, a sealing ring 108, a gland nut 110, and a ground cone 120.

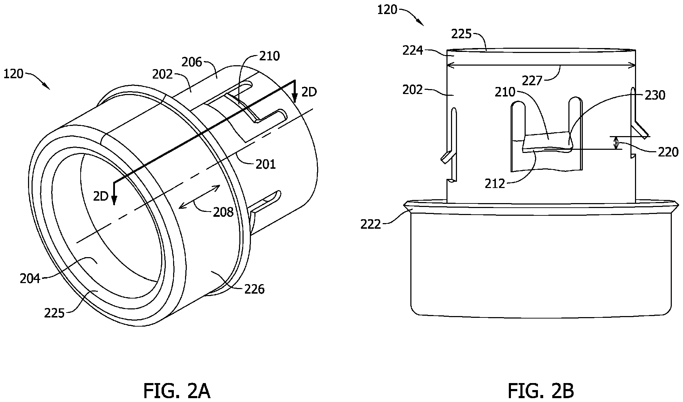

In operation, a cone body 202 (also see FIGs. 2A-2D described later) of ground cone 120 is inserted into conduit 104 and coupled with conduit 104. Fitting body 106 is capped over a mouth 122 of conduit 104 and gland nut 110 is coupled with fitting body 106 via threads of fitting body 106 and threads of gland nut 110. The sealing ring 108 is positioned proximate mouth 122, providing sealing of the assembly to limit water and other corrosive substances from being in contact with the junction and/or entering into the conduit to be in contact with the interior of conduit assembly 100 and wiring running through conduit 104. Fitting assembly 102 includes a grounding coupling (not shown) configured to be coupled with other components in fitting assembly 102. The grounding coupling is sized to receive a grounding conductor, providing grounding to conduit assembly 100. The grounding coupling is in electrical communication with other components of fitting assembly 102 via physical contact with fitting body 106 and/or gland nut 110. Fitting body 106 is in contact with gland nut 110. Fitting body 106 is also in contact with interior of the conduit 104 via ground cone 120. Ground cone 120 is configured to provide and/or maintain electrical contact between the interior of conduit 104 and the rest of conduit assembly 100. As a result, electrical continuity of conduit assembly 100 as a whole is ensured in passing a required quantify of current to meet the requirements under standards such as NEC (National Electrical Code). Ground cone 120 also provides and/or maintains physical contact of the conduit 104 with the rest of the conduit assembly 104. Without a ground cone, the conduit may not be coupled with other components of the conduit assembly, and the conduit assembly may fall apart. The wiring inside may be exposed as a result, compromising the performance and safety of the conduit assembly.

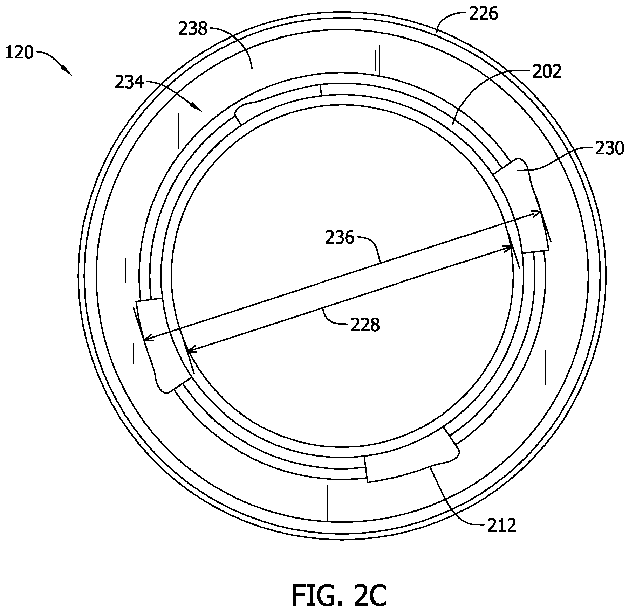

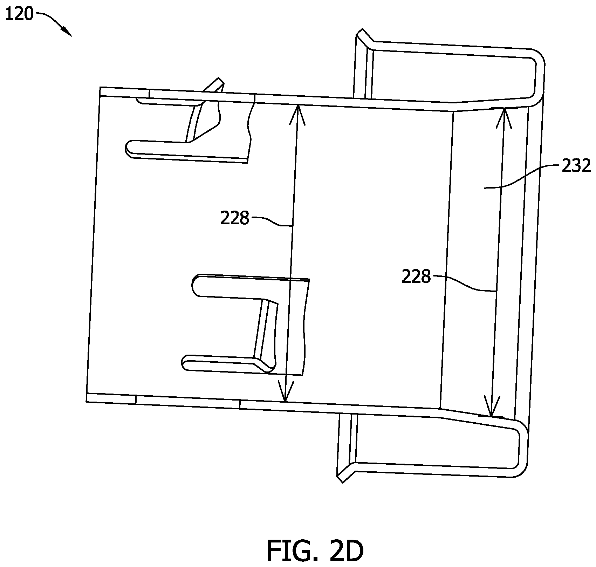

FIGs. 2A-2D show example ground cone 120. FIG. 2A is a perspective view of ground cone 120. FIG. 2B is a side perspective view of ground cone 120. FIG. 2C is a bottom perspective view of ground cone 120. FIG. 2D is a cross-sectional view of ground cone along line 2D-2D of FIG. 2A.

In the example embodiment, ground cone 120 includes a cone body 202. Cone body 202 may define a longitudinal axis 201. Cone body 202 is generally cylindrical. Cone body 202 may be conical. Cone body may be in other shapes, such as irregular shapes or polygonal, that enable ground cone 120 to function as described herein. Cone body 202 includes a cap end 204 and a bottom end 206 opposite cap end 204. Cap end 204 and bottom end 206 define a longitudinal direction 208 of cone body 202. Cone body 202 further includes one or more tabs 210 extending radially outward. Tabs 210 are positioned on cone body 202. Tab 210 may be constructed by cutting along sides of tab 210 and then bending the tab radially outward from the cuts. A portion of cone body 202 may be cut out. Alternatively, a cut may be made along sides of tab 210 without cutting out a portion of cone body 202 and the cut sides facilitate projecting tab 210 from cone body 202. Tab 210 includes an edge 212. Edge 212 may be a helical edge 212. Helical edge 212 is shaped to be received in a groove defined by threads. For example, helical edge 212 is complementary to a groove 114 of a thread 116 of an interior 118 of conduit 104 (see FIG. 1B) such that helical edge 212 may be rotated into groove 114 defined by threads 116 and engage with threads 116. Edges 212 are all depicted as helical as an example. In some embodiments, one or some edges 212 are helical while other edges 212 are in other shapes. In some embodiments, edges 212 are in shapes other than being helical.

In the example embodiment, ground cone 120 includes four tabs 210. Ground cone 120 may include other numbers of tabs 210, such as three or five, that enable ground cone 120 to function as described herein. Helical edges 212 may be shaped and positioned to be received in one thread, or a plurality of threads, by adjusting a longitudinal distance 220 between tabs 210. Longitudinal distance 220 may be the distance in longitudinal direction 208 between midpoints of edges 212 of neighboring tabs 210 (see FIG. 2B).

In a known ground cone, a helical edge is positioned at the very tip of ground cone. The arrangement presents difficulty in installing the ground cone into the conduit, because the helical edge needs to catch the threads of the conduit to assemble the ground cone with the conduit. The ground cone is sized complementary to the conduit and the threads of the conduit are in the interior of the conduit. It may be tricky for the helical edge to catch the interior threads. Further, when the helical edge finally catches the threads, the ground cone may not be centered.

In contrast, in the example embodiment, cone body 202 includes a leading portion 224 at bottom end 206. Leading portion 224 is positioned longitudinally further away from cap 226 than helical edges 212. Leading portion 224 is cylindrical. Alternatively, leading portion 224 is conical, where outer diameter 227 reduces toward a body edge 225 of cone body 202. To couple ground cone 120 with conduit 104, leading portion 224 enters into interior 118 of conduit 104 before helical edge 212, facilitating the centering and alignment of ground cone 120 in conduit 104 to guide helical edges 212 to engage threads 116, thereby increasing the convenience of installation.

In the example embodiment, edge 212 includes a projection 230 extending further radially outward than the remaining edge 212. When ground cone 120 is coupled with conduit 104, projections 230 project further into interior 118 of conduit 104 than the remaining edge 212 (see FIG. 1B). Because projections extend further radially outward, projections 230 may scrap away corrosion on interior 118 during the coupling process when ground cone 120 is pushed or rotated into conduit 104, thereby increasing the electrical contact between ground cone 120 and conduit 104. Projection 230 is depicted with helical edge 212 as an example for illustration purposes. Projection 230 may be positioned on edge 212 in other shapes, such as an arch or a line, that enable ground cone 120 to function as described herein. Each edge 212 is depicted as including a projection 230 as an example for illustration purposes. In some embodiments, some of edges 212 include projections 230 and other edges 212 do not include projections 230.

In the example embodiment, cone body 202 includes a bulging portion 232 (see FIG. 2D). At bulging portion 232, cone body 202 slanted radially outward such that an inner diameter 228 of cone body 202 at bulging portion 232 is greater than inner diameter 228 at other portion of cone body 202. Bulging portion 232 is advantageous in strengthening electrical contact between ground cone 120 with wall 124 of conduit 104. When ground cone 120 is assembled with conduit 104, bulging portion 232 pushes against wall 124, thereby strengthening electrical contact between ground cone 120 and conduit 104. In some embodiments, cone body 202 does not include a bulging portion 232.

In the example embodiment, ground cone 120 further includes a cap 226 extending from cone body 202. Cap 226 may extend radially outward away from body edge 225 of cone body 202 and then longitudinally away from body edge 225 toward bottom end 206 of cone body 202. As such, cap 226 curves around from body edge 225 of cone body 202. Cap 226 and cone body 202 define a channel 234 (FIG. 2C) sized to receive a mouth 122 of conduit 104 therein.

In some embodiments, cap 226 includes a flange 222 extending radially outward from the remaining cap 226. Flange 222 presses against sealing ring 108 to provide sealing of conduit assembly (see FIG. 1B).

In the example embodiment, ground cone 120 is formed as one single piece. Ground cone 120 may be formed by a simple manufacturing process of stamping from sheet metal, providing an economical manufacturing option for manufacturing ground cones 120 in an industrial scale. Single piece ground cones 120 are also advantageous in assembling of the conduit assemblies, because coupling individual pieces of a ground cone together at the site is eliminated, thereby reducing cost in labor, equipment, and material.

In the example embodiment, ground cone 120 is fabricated with an electrically-conductive material. Example material is metal.

Referring back to FIGs. 1A-1C, ground cone 120 is used to establish and/or maintain electrical connection between interior 118 of conduit 104 and the rest of conduit assembly 100. In the field, fittings and conduits are in various standardized trade sizes, where the trade size may refer to the approximate inner or outer diameter of the conduit or the approximate inner diameter of the mouth of the fitting. Ground cone 120 may be sized in the same manner such that a ground cone at a certain trade size fits with a conduit of the same trade size. For example, a ground cone of size 3/4 is sized to fit with a conduit of size 3/4. An outer diameter 227 of ground cone 120 at cone body 202 is smaller than an inner diameter 129 of conduit 104, and an inner diameter 228 of ground cone at cap 226 is greater than an outer diameter 131 of conduit 104. As a result, an end 140 of conduit 104 is nestled between cap 226 and cone body 202. A curve defined by edges 212 has a dimension such as a diameter 236 (see FIG. 2C) greater than inner diameter 129 of conduit 104, such that helical edges 212 are received in grooves 114 of threads 116 and engage with threads 116 and/or projections 230 engage with interior 118 of conduit 104, establishing and/or strengthening the electrical contact between ground cone 120 and interior 118 of conduit 104. Further, at bulging portion 232, outer diameter 227 of cone body 202 may be bulged from being smaller than an inner diameter 129 of conduit 104 to being greater than inner diameter 129, thereby pressing against conduit 104 when ground cone 120 is coupled with conduit 104.

In the example embodiment, assembling conduit assembly 100 is simplified with ground cone 120. To assemble ground cone 120 with conduit 104, cone body 202 may be pushed or rotated into conduit 104. Cone body 202 may be coupled into conduit 104 until an edge 121 of mouth 122 of conduit 104 becomes in contact with channel bottom 238 of channel 234 of ground cone 120. Helical edges 212 are received in grooves 114 defined by interior threads 116 of conduit 104. The contact between ground cone 120 and interior 118 of conduit 104 is strengthened by projections 230, where projections 230 digs into wall 124 of conduit 104 and provide strengthened electrical contact between ground cone 120 and interior 118 of conduit 104. The contact is further strengthened by bulging portion 232, where bulging portion 232 pushes against interior 118 of conduit 104. Strengthened electrical contact is advantageous in passing current test required by standards.

Flexible metal conduits are depicted as example for illustration purposes only. Assemblies and methods described herein may be applied with rigid conduits. When conduit 104 does not include interior threads 116, to couple ground cone 120 with conduit 104, cone body 202 is inserted into interior 118 of conduit 104 and is pushed into conduit 104 by applying force at cap 226. The friction and the engagement of projections 230 with interior wall 124 of conduit 104 provide the coupling force and electrical contact between ground cone 120 and interior 118 of conduit 104.

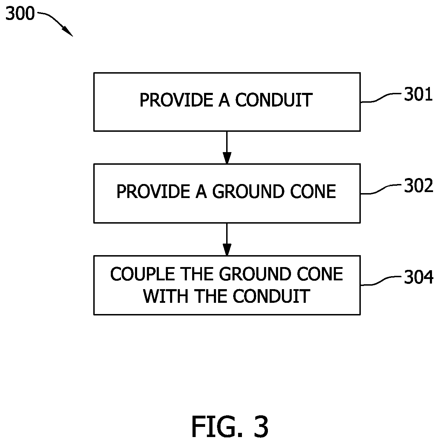

FIG. 3 is a flow chart of an example method 300 of assembling a conduit assembly. In the example embodiment, method 300 includes providing 301 a conduit 104. Method 300 also includes providing 302 a ground cone. Ground cones 120 described above may be used. Method 300 further includes coupling 304 the ground cone with the conduit. Ground cone 120 may be pushed into conduit 104 to be coupled with conduit 104. For example, ground cone 120 is pushed into conduit 104 and edges 212 of tabs 210 are received in grooves of threads 116. If projections 230 are included in ground cone 120, projections 230 engage with interior 118 of conduit, coupling with conduit 104 without the requirement of interior threads 116 on conduit 104. Ground cone 120 may be rotatably coupled with conduit 104 by engaging helical edges 212 of ground cone 120 with threads 116 of conduit 104. Leading portion 224 eases the coupling. During assembling, leading portion 224 is inserted into conduit 104 before tabs 210. Leading portion 224 has a smaller diameter than end 140 of conduit 104, and therefore may be inserted into conduit 104 with ease. The cylindrical or conical shape of leading portion 224 facilitates the alignment of cone body 202 with end 140 of conduit 104 such that cone body 202 is centered when edges 212 engage with threads 116 on interior 118 of conduit 104. Cap 226 and channel 234 of cone body serves as a stopper that prevents ground cone 120 from being inserted too far into conduit.

At least one technical effect of the systems and methods described herein includes (a) a ground cone that may be coupled with a conduit by being pushed in or rotatably coupled with the conduit; (b) a ground cone including helical edges for facilitating rotatable coupling, (c) a ground cone including projections for increased electrical contact, (d) a ground cone including a bulging portion for increased electrical contact, and (e) a ground cone including a leading portion to facilitate the rotatable coupling.

Example embodiments of assemblies and methods for fabricating conduit assemblies are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims.

## Claims

1. A ground cone (120) for providing electrical contact to an interior (118) of a conduit (104), comprising:
a cone body (202) comprising one or more tabs (210) positioned on the cone body and extending radially outward from the cone body, the one or more tabs positioned separately from one another, at least one of the one or more tabs having an edge (212), the cone body comprising a cap end (204) and a bottom end (206) opposite the cap end; and
a cap (226) extending longitudinally from the cone body at the cap end and extending toward the bottom end,
wherein the cone body and the cap define a channel (234) sized to receive an end of a conduit (104) therein,
**characterized by**
the edge (212) comprising a projection (230) protruding radially outward from a remaining of the edge.

2. The ground cone of claim 1, wherein at least one of the edges is a helical edge (212), the helical edge shaped to be received in a groove (114) of a thread (116).

3. The ground cone of claim 2, wherein the cone body comprises a plurality of tabs (210), the helical edges of the plurality of tabs shaped to be received in grooves (114) of threads (116).

4. The ground cone of any one of claims 1 to 3, wherein the cone body comprises a bulging portion (232) extending radially outward from a remaining of the cone body.

5. The ground cone of any one of claims 1 to 4, wherein the cone body comprises a leading portion (224) positioned at the bottom end of the cone body and positioned longitudinally further away from the cap than the edge.

6. The ground cone of any one of claims 1 to 5, wherein the ground cone is integrally formed into one single piece.

7. The ground cone of any one of claims 1 to 6, wherein the cap further comprises a flange (222) extending radially outward away from a remaining of the cap.

8. A method (300) of fabricating a conduit assembly (100), comprising:
providing (301) a conduit (104);
providing (302) a ground cone (120), wherein the ground cone includes:
a cone body (202) including one or more tabs (210) positioned on the cone body and extending radially outward from the cone body, the one or more tabs positioned separately from one another, at least one of the one or more tabs having an edge (212) comprising a projection (230) protruding radially outward from a remaining of the edge, the cone body including a cap end (204) and a bottom end (206) opposite the cap end; and
a cap (226) extending longitudinally from the cone body at the cap end and extending toward the bottom end,
wherein the cone body and the cap define a channel (234) sized to receive an end of the conduit (104) therein; and
coupling (304) the ground cone with the conduit.

9. The method of claim 8, wherein the coupling further comprises:
pushing the cone body into the conduit such that the projection engages with the conduit.

10. The method of claim 8 or 9, wherein at least one of the edges is a helical edge (212), the helical edge shaped to be received in a groove (114) of a thread (116) of the conduit, and the coupling further comprises rotatably coupling the ground cone with the conduit by:
engaging the helical edge with the thread of the conduit.

11. The method of claim 10, wherein the cone body includes a plurality of tabs (210), the helical edges of the plurality of tabs shaped to be received in grooves (114) of threads (116) of the conduit, and the coupling further comprises rotatably coupling the ground cone with the conduit by:
engaging the helical edges with the threads of the conduit.

12. The method of any one of claims 8 to 11, wherein the cone body includes a bulging portion (232) extending radially outward from a remaining of the cone body, and the coupling further comprising:
coupling the ground cone with the conduit such that the bulging portion presses against the conduit.

13. The method of any one of claims 8 to 12, wherein the cone body includes a leading portion (224) positioned at the bottom end of the cone body and positioned longitudinally further away from the cap than the edge, and the coupling further comprising:
inserting the leading portion into the conduit; and
coupling the one or more tabs with the conduit.

14. The method of any one of claims 8 to 13, wherein the ground cone is integrally formed into one single piece.

15. The method of any one of claims 8 to 14, wherein the cap further comprises a flange (222) extending radially outward away from a remaining of the cap.

## Patentansprüche

1. Erdungskonus (120) zum Bereitstellen eines elektrischen Kontakts zu einem Inneren (118) eines Rohrs (104), umfassend:
einen Konuskörper (202), der eine oder mehrere Laschen (210) umfasst, die an dem Konuskörper positioniert sind und sich von dem Konuskörper radial nach außen erstrecken, wobei die eine oder die mehreren Laschen getrennt voneinander positioniert sind, wobei mindestens eine der einen oder mehreren Laschen eine Kante (212) aufweist, wobei der Konuskörper ein Kappenende (204) und ein unteres Ende (206) gegenüber dem Kappenende umfasst; und
eine Kappe (226), die sich in Längsrichtung von dem Konuskörper am Kappenende erstreckt und sich zum unteren Ende hin erstreckt,
wobei der Konuskörper und die Kappe einen Kanal (234) definieren, der so dimensioniert ist, dass er ein Ende eines Rohrs (104) darin aufnimmt,
**dadurch gekennzeichnet, dass** die Kante (212) einen Vorsprung (230) umfasst, der von einem Rest der Kante radial nach außen vorsteht.

2. Erdungskonus nach Anspruch 1, wobei mindestens eine der Kanten eine spiralförmige Kante (212) ist, wobei die spiralförmige Kante so geformt ist, dass sie in einer Nut (114) eines Gewindes (116) aufgenommen wird.

3. Erdungskonus nach Anspruch 2, wobei der Konuskörper mehrere Laschen (210) umfasst, wobei die spiralförmigen Kanten der mehreren Laschen so geformt sind, dass sie in Nuten (114) von Gewinden (116) aufgenommen werden.

4. Erdungskonus nach einem der Ansprüche 1 bis 3, wobei der Konuskörper einen sich wölbenden Abschnitt (232) umfasst, der sich von einem Rest des Konuskörpers radial nach außen erstreckt.

5. Erdungskonus nach einem der Ansprüche 1 bis 4, wobei der Konuskörper einen vorderen Abschnitt (224) umfasst, der am unteren Ende des Konuskörpers positioniert ist und in Längsrichtung weiter entfernt von der Kappe als die Kante positioniert ist.

6. Erdungskonus nach einem der Ansprüche 1 bis 5, wobei der Erdungskonus integral in einem einzelnen Teil ausgebildet ist.

7. Erdungskonus nach einem der Ansprüche 1 bis 6, wobei die Kappe ferner einen Flansch (222) umfasst, der sich radial nach außen von einem Rest der Kappe weg erstreckt.

8. Verfahren (300) zum Herstellen einer Rohrbaugruppe (100), umfassend:
Bereitstellen (301) eines Rohrs (104);
Bereitstellen (302) eines Erdungskonus (120), wobei der Erdungskonus Folgendes umfasst:
einen Konuskörper (202), der eine oder mehrere Laschen (210) umfasst, die an dem Konuskörper positioniert sind und sich von dem Konuskörper radial nach außen erstrecken, wobei die eine oder die mehreren Laschen getrennt voneinander positioniert sind, wobei mindestens eine der einen oder der mehreren Laschen eine Kante (212) aufweist, die einen Vorsprung (230) umfasst, der von einem Rest der Kante radial nach außen vorsteht, wobei der Konuskörper ein Kappenende (204) und ein unteres Ende (206) gegenüber dem Kappenende umfasst; und
eine Kappe (226), die sich in Längsrichtung von dem Konuskörper am Kappenende erstreckt und sich zum unteren Ende hin erstreckt,
wobei der Konuskörper und die Kappe einen Kanal (234) definieren, der so dimensioniert ist, dass er ein Ende des Rohrs (104) darin aufnimmt; und
Koppeln (304) des Erdungskonus mit dem Rohr.

9. Verfahren nach Anspruch 8, wobei das Koppeln ferner Folgendes umfasst:
Schieben des Konuskörpers in das Rohr, so dass der Vorsprung mit dem Rohr in Eingriff kommt.

10. Verfahren nach Anspruch 8 oder 9, wobei mindestens eine der Kanten eine spiralförmige Kante (212) ist, wobei die spiralförmige Kante so geformt ist, dass sie in einer Nut (114) eines Gewindes (116) des Rohrs aufgenommen wird, und wobei das Koppeln ferner drehendes Koppeln des Erdungskonus mit dem Rohr durch Folgendes umfasst:
Ineingriffbringen der spiralförmigen Kante mit dem Gewinde des Rohrs.

11. Verfahren nach Anspruch 10, wobei der Konuskörper mehrere Laschen (210) umfasst, wobei die spiralförmigen Kanten der mehreren Laschen so geformt sind, dass sie in Nuten (114) von Gewinden (116) des Rohrs aufgenommen werden, und wobei das Koppeln ferner drehendes Koppeln des Erdungskonus mit dem Rohr durch Folgendes umfasst:
Ineingriffbringen der spiralförmigen Kanten mit den Gewinden des Rohrs.

12. Verfahren nach einem der Ansprüche 8 bis 11, wobei der Konuskörper einen sich wölbenden Abschnitt (232) umfasst, der sich von einem Rest des Konuskörpers radial nach außen erstreckt, und wobei das Koppeln ferner Folgendes umfasst:
Koppeln des Erdungskonus mit dem Rohr, so dass der sich wölbende Abschnitt gegen das Rohr drückt.

13. Verfahren nach einem der Ansprüche 8 bis 12, wobei der Konuskörper einen vorderen Abschnitt (224) umfasst, der am unteren Ende des Konuskörpers positioniert ist und in Längsrichtung weiter entfernt von der Kappe als die Kante positioniert ist, und wobei das Koppeln ferner Folgendes umfasst:
Einsetzen des vorderen Abschnitts in das Rohr; und
Koppeln der einen oder der mehreren Laschen mit dem Rohr.

14. Verfahren nach einem der Ansprüche 8 bis 13, wobei der Erdungskonus integral in einem einzelnen Teil ausgebildet wird.

15. Verfahren nach einem der Ansprüche 8 bis 14, wobei die Kappe ferner einen Flansch (222) umfasst, der sich radial nach außen von einem Rest der Kappe weg erstreckt.

## Revendications

1. Cône de terre (120) pour assurer un contact électrique avec un intérieur (118) d'une conduite (104), comprenant :
un corps de cône (202) comprenant une ou plusieurs languettes (210) positionnées sur le corps de cône et s'étendant radialement vers l'extérieur à partir du corps de cône, la ou les languettes étant positionnées séparément les unes des autres, la ou au moins une des languettes ayant un bord (212), le corps de cône comprenant une extrémité de chapeau (204) et une extrémité de base (206) opposée à l'extrémité de chapeau ; et
un chapeau (226) s'étendant longitudinalement à partir du corps de cône au niveau de l'extrémité de chapeau et s'étendant vers l'extrémité de base,
le corps de cône et le chapeau définissant un canal (234) dimensionné pour recevoir une extrémité d'une conduite (104) dans celui-ci,
**caractérisé en ce que** le bord (212) comporte une saillie (230) faisant saillie radialement vers l'extérieur relativement au reste du bord.

2. Cône de terre selon la revendication 1, dans lequel au moins l'un des bords est un bord hélicoïdal (212), le bord hélicoïdal présentant une forme lui permettant d'être reçu dans une rainure (114) d'un filet (116).

3. Cône de terre selon la revendication 2, dans lequel le corps de cône comprend une pluralité de languettes (210), les bords hélicoïdaux de la pluralité de languettes présentant une forme leur permettant d'être reçus dans des rainures (114) de filets (116).

4. Cône de terre selon l'une quelconque des revendications 1 à 3, dans lequel le corps de cône comprend une partie proéminente (232) s'étendant radialement vers l'extérieur relativement au reste du corps de cône.

5. Cône de terre selon l'une quelconque des revendications 1 à 4, dans lequel le corps de cône comprend une partie antérieure (224) positionnée à l'extrémité de base du corps de cône et positionnée longitudinalement plus loin du chapeau que le bord.

6. Cône de terre selon l'une quelconque des revendications 1 à 5, le cône de terre étant formé d'un seul tenant en une seule pièce.

7. Cône de terre selon l'une quelconque des revendications 1 à 6, dans lequel le chapeau comprend en outre une collerette (222) s'étendant radialement vers l'extérieur relativement au reste du chapeau.

8. Procédé (300) de fabrication d'un ensemble conduite (100), comprenant :
préparer (301) une conduite (104) ;
préparer (302) un cône de terre (120), le cône de terre comportant :
un corps de cône (202) comprenant une ou plusieurs languettes (210) positionnées sur le corps de cône et s'étendant radialement vers l'extérieur à partir du corps de cône, la ou les languettes étant positionnées séparément les unes des autres, la ou au moins une des languettes ayant un bord (212) comportant une saillie (230) faisant saillie radialement vers l'extérieur relativement au reste du bord, le corps de cône comprenant une extrémité de chapeau (204) et une extrémité de base (206) opposée à l'extrémité de chapeau ; et
un chapeau (226) s'étendant longitudinalement à partir du corps de cône au niveau de l'extrémité de chapeau et s'étendant vers l'extrémité de base,
le corps de cône et le chapeau définissant un canal (234) dimensionné pour recevoir une extrémité d'une conduite (104) dans celui-ci ; et
accoupler (304) le cône de terre avec la conduite.

9. Procédé selon la revendication 8, dans lequel l'accouplement comprend en outre :
pousser le corps de cône dans la conduite de sorte que la saillie entre en prise avec la conduite.

10. Procédé selon la revendication 8 ou 9, dans lequel au moins l'un des bords est un bord hélicoïdal (212), le bord hélicoïdal présentant une forme lui permettant d'être reçu dans une rainure (114) d'un filet (116) de la conduite, et l'accouplement comprend en outre l'accouplement à rotation du cône de terre avec la conduite par :
mise en prise du bord hélicoïdal avec le filet de la conduite.

11. Procédé selon la revendication 10, dans lequel le corps de cône comprend une pluralité de languettes (210), les bords hélicoïdaux de la pluralité de languettes présentant une forme leur permettant d'être reçus dans des rainures (114) de filets (116) de la conduite, et l'accouplement comprend en outre l'accouplement à rotation du cône de terre avec la conduite par :
mise en prise des bords hélicoïdaux avec les filets de la conduite.

12. Procédé selon l'une quelconque des revendications 8 à 11, dans lequel le corps de cône comprend une partie proéminente (232) s'étendant radialement vers l'extérieur relativement au reste du corps de cône, et l'accouplement comprenant en outre :
l'accouplement du cône de terre avec la conduite de sorte que la partie proéminente exerce une pression contre la conduite.

13. Procédé selon l'une quelconque des revendications 8 à 12, dans lequel le corps de cône comprend une partie antérieure (224) positionnée à l'extrémité de base du corps de cône et positionnée longitudinalement plus loin du chapeau que le bord, et l'accouplement comprenant en outre :
insérer la partie antérieure dans la conduite ; et
accoupler la ou les languettes avec la conduite.

14. Procédé selon l'une quelconque des revendications 8 à 13, dans lequel le cône de terre est formé d'un seul tenant en une seule pièce.

15. Procédé selon l'une quelconque des revendications 8 à 14, dans lequel le chapeau comprend en outre une collerette (222) s'étendant radialement vers l'extérieur relativement au reste du chapeau.
